# EUROPÄISCHE PATENTSCHRIFT

(11) **EP 0 370 302 B1**
(45) Veröffentlichungstag und Bekanntmachung des Hinweises auf die Patenterteilung: **11.08.1993**
(21) Anmeldenummer: 89120634.4
(22) Anmeldetag: 07.11.1989
(51) Int. Cl.: H02M 7/10

(54) **Mehrstufiger Kaskadengleichrichter**
Multistage cascade rectifier
Redresseur en cascade à plusieurs paliers

(30) Priorität: 21.11.1988 DE 3839310
(43) Veröffentlichungstag der Anmeldung: 30.05.1990
(73) Patentinhaber: SIEMENS AKTIENGESELLSCHAFT, 80333 München (DE)
(72) Erfinder: Mook, Bruno, D-7500 Karlsruhe 41 (DE)

(56) Entgegenhaltungen:
- CH-A- 335 750
- GB-A- 1 564 401

## Beschreibung

Die Erfindung bezieht sich auf einen mehrstufigen Kaskadengleichrichter mit einer Glättungskondensatorsäule und zwei symmetrisch dazu geschalteten Schubkondensatorsäulen.

Ein derartiger mehrstufiger Kaskadengleichrichter ist beispielsweise aus der CH-PS 335 750 bekannt. Eine Reihenschaltung einer der Stufenzahl entsprechenden Anzahl von Kondensatoren ist als sogenannte Glättungskondensatorsäule an die auf Nullpotential liegende Mittelanzapfung der Sekundärwicklung eines Hochspannungstrafos angeschlossen. Symmetrisch dazu sind zwei weitere Reihenschaltungen von Kondensatoren, die sogenannten Schubkondensatorsäulen, an der Sekundärwicklung angeschlossen. Jede Kaskadenstufe ist durch entsprechende Beschaltung mit Hochspannungsdioden als Vollweggleichrichterstufe ausgebildet.

Bekannte Kaskadengleichrichter, wie sie insbesondere als Hochspannungsgeneratoren für die Versorgung von Röntgenröhren in der Röntgentechnik eingesetzt werden, sind konstruktiv auf die höchste Typenleistung, das ist das Produkt aus maximaler Ausgangsspannung und maximalem Ausgangsström, ausgelegt. Das bedeutet, daß Hochspannungstransformator, Wechselrichter und Leistungselektronik für diese Ausgangsleistung ausgelegt sein müssen.
Wird mit kleineren Ausgangsspannungen und entsprechend der Ausgangsleistung erhöhten Lastströmen gearbeitet, muß die Primärwicklung des Hochspannungstransformators für die entsprechend hohe Strombelastung ausgelegt werden.

Es besteht die Aufgabe, durch möglichst einfache Schaltungsmaßnahmen den bekannten mehrstufigen Kaskadengleichrichter so weiterzubilden, daß der Schaltungsaufwand verringert wird.

Eine Lösung der Aufgabe wird in einem mehrstufigen Kaskadengleichrichter der eingangs genannten Art gesehen, bei dem in den Schubkondensatorsäulen mindestens ein Schalterpaar zur Abschaltung der folgenden Kaskaden angeordnet ist.
Damit wird eine geringere Strombelastung im Primärkreis bei höheren Lastströmen erreicht, so daß der Bauaufwand für Hochspannungstransformator, Wechselrichter und Leistungselektronik verringert werden kann, oder es besteht die Möglichkeit, bei gleichem Bauaufwand die Strombelastung und die Ausgangsspannung zu erhöhen.

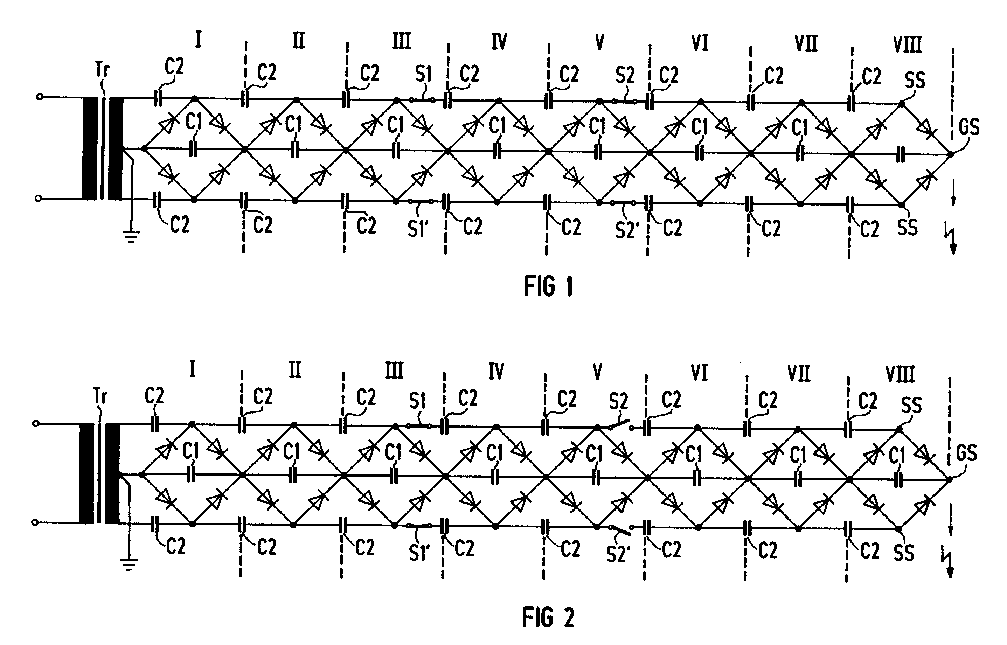

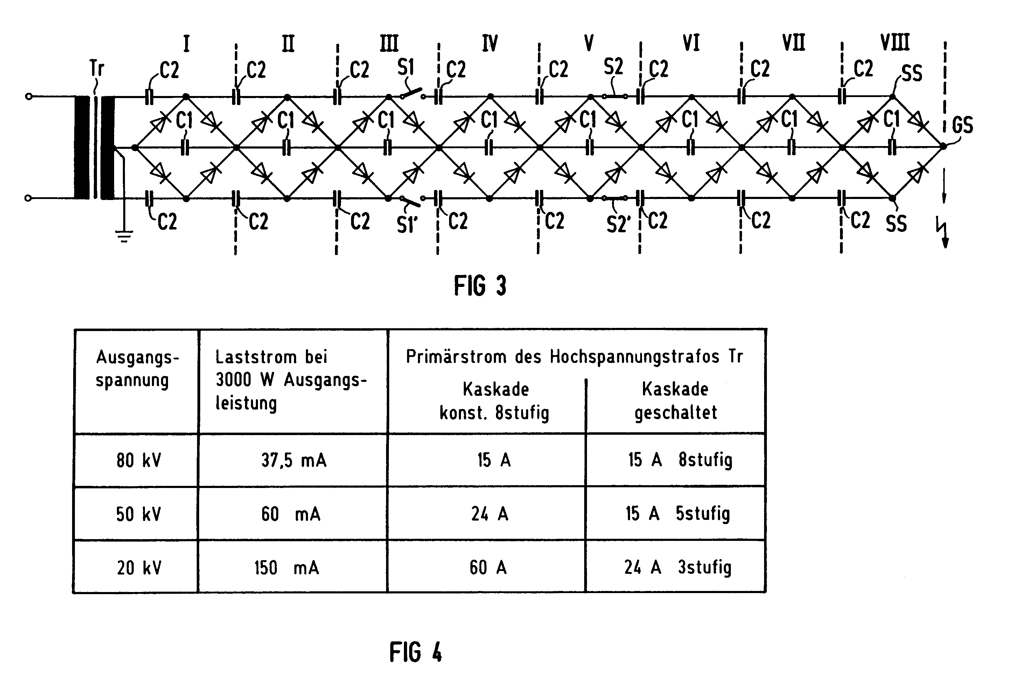

Zur Erläuterung der Erfindung ist in den Figuren 1 bis 3 ein Ausführungsbeispiel in den verschiedenen Schaltphasen dargestellt.
In der Tabelle der Figur 4 sind die Strombelastungen in den verschiedenen Schaltphasen einander gegenübergestellt.

Der in der Figur 1 gezeigte Kaskadengleichrichter mit acht Stufen I ... VIII zur Spannungsvervielfachung besteht, wie bekannt, aus einem Hochspannungstransformator TR, dessen Sekundärwicklung mit einer auf Nullpotential liegenden Mittelanzapfung versehen ist.
An die Mittelanzapfung ist eine als Glättungskondensatorsäule GS bezeichnete Reihenschaltung von Kondensatoren C1 angeschlossen, deren Anzahl der der Kaskadenstufen entspricht. An den äußeren Anschlüssen der Sekundärwicklung des Hochspannungstransformators TR sind symmetrisch zu der Glättungskondensatorsäule GS zwei weitere Reihenschaltungen von Kondensatoren C2 als sogenannte Schubkondensatorsäulen SS angeschlossen. In jeder Kaskadenstufe I ... VIII sind vier Gleichrichterdioden so geschaltet, daß jeweils eine Vollweggleichrichterschaltung gebildet wird.
Zur erfindungsgemäßen Abschaltung von Kaskadenstufen ist hier vor der Stufe IV und der Stufe VI jeweils ein Schalterpaar S1, S1' bzw. S2, S2' in den Schubkondensatorsäulen angeordnet, mit denen die jeweils folgenden Kaskadenstufen abschaltbar sind.

Werden, wie Figur 2 zeigt, die Schalter S2, S2' geöffnet, so sind nur noch fünf Kaskadenstufen in Betrieb bei entsprechend niedrigerer Ausgangsspannung und höherem Ausgangsstrom. Soll der Kaskadengleichrichter nur mit drei Stufen betrieben werden, so ist das Schalterpaar S1, S1' geöffnet, S2, S2' kann offen oder geschlossen sein.

In der Tabelle in Figur 4 sind für das gezeigte Ausführungsbeispiel eines achtstufigen Kaskadengleichrichters die Werte bei unterschiedlichen Ausgangsspannungen und Lastströmen aufgezeigt. Man erkennt, daß bei einer Ausgangsspannung von 20 kV und einem Laststrom von 150 mA der Primärstrom im Hochspannungstransformator bei der dreistufig geschalteten Kaskade um mehr als die Hälfte geringer ist als bei der herkömmlichen Schaltung.

## Patentansprüche

1. Mehrstufiger Kaskadengleichrichter mit einer an die sekundärseitige Mittelanzapfung eines Hochspannungstransformators angeschlossenen Reihenschaltung von Glättungskondensatoren (Glättungskondensatorsäule) und zwei symmetrisch dazu geschalteten Reihenschaltungen von Schubkondensatoren (Schubkondensatorsäulen), wobei jede Kaskade aus einer Vollweggleichrichterschaltung besteht, **dadurch gekennzeichnet,** daß in den Schubkondensatorsäulen (SS) mindestens ein Schalterpaar (S1, S1') zur Abschaltung der folgenden Kaskadenstufen angeordnet ist.

## Claims

1. Multi-stage cascade rectifier having a series circuit arrangement of smoothing capacitors (smoothing capacitor column) connected to the secondary-side centre tap of a high-voltage transformer and two series circuit arrangements of booster capacitors (booster capacitor columns) connected symmetrically thereto, with each cascade consisting of a full-wave rectifier circuit arrangement, characterised in that at least one pair of switches (S1, S1') for switching off the following cascade stages is arranged in the booster capacitor columns (SS).

## Revendications

1. Redresseur en cascade à plusieurs étages, comportant un montage série de condensateurs de lissage (colonne de condensateurs de lissage), qui est relié à la prise médiane, située côté secondaire, d'un transformateur à haute tension, et deux montages série, qui sont branchés symétriquement par rapport au montage précédent, de condensateurs à coulisse (colonnes de condensateurs à coulisse), chaque cascade étant constituée par un circuit redresseur double alternance, caractérisé par le fait qu'au moins un couple d'interrupteurs (S1,S1'), servant à déconnecter les étages aval de la cascade, est disposé dans les colonnes de condensateurs à coulisse (SS).
